# EUROPEAN PATENT APPLICATION

(11) **EP 4 542 081 A1**
(43) Date of publication of application: **23.04.2025**
(21) Application number: 23823575.8
(22) Date of filing: 11.05.2023
(51) Int. Cl.: F16H 1/06, F16H 57/023

(54) **UNIT, VEHICLE, AND METHOD FOR MANUFACTURING VEHICLE**

(30) Priority: 14.06.2022 JP 2022095651
(71) Applicant: Jatco Ltd., Shizuoka 417-8585 (JP)
(72) Inventor: MAEDA, Atsushi, Fuji-shi, Shizuoka 417-8585 (JP); SUWABAYASHI, Akira, Fuji-shi, Shizuoka 417-8585 (JP); SHOICHI, Minoru, Fuji-shi, Shizuoka 417-8585 (JP); ISHII, Shigeru, Fuji-shi, Shizuoka 417-8585 (JP)
(74) Representative: Hoefer & Partner Patentanwälte mbB
(86) International application number: PCT/JP2023/017789
(87) International publication number: WO 2023/243272

(57) **Abstract**

[PROBLEMS] To reduce a dimension of a unit in a predetermined direction.

[SOLUTIONS] A unit includes: a rotary electric machine; a first gear connected downstream of the rotary electric machine; a second gear configured to mesh with the first gear; and a shaft connected downstream of the second gear. The shaft includes a first output end and a second output end. The rotary electric machine and the first gear are arranged on a first axis. The second gear, the shaft, the first output end, and the second output end are arranged on a second axis. The second gear is disposed to be sandwiched between the first output end and the second output end.

## Description

### TECHNICAL FIELD

The present invention relates to a unit, a vehicle, and a vehicle manufacturing method.

### BACKGROUND ART

Patent Document 1 discloses a unit including an electric motor, an automatic transmission, and a linkage unit that transmits power of the electric motor to the automatic transmission.

### PRIOR ART DOCUMENT

### PATENT DOCUMENT

Patent Document 1: JP2013-005637A

### SUMMARY OF INVENTION

### PROBLEM TO BE SOLVED BY THE INVENTION

However, in the unit of Patent Document 1, dimensions in a radial direction of the electric motor and the power transmission device are equal to an outer diameter of the unit and are the same in any direction.

An object of the present invention is to reduce a dimension of a unit in a predetermined direction.

### MEANS FOR SOLVING THE PROBLEM

According to one aspect of the present invention, a unit includes: a rotary electric machine; a first gear connected downstream of the rotary electric machine; a second gear configured to mesh with the first gear; and a shaft connected downstream of the second gear, in which the shaft includes a first output end and a second output end, the rotary electric machine and the first gear are arranged on a first axis, the second gear, the shaft, the first output end, and the second output end are arranged on a second axis, and the second gear is disposed to be sandwiched between the first output end and the second output end.

### EFFECT OF THE INVENTION

According to one aspect of the present invention, a dimension in a first direction in which the first gear and the second gear are arranged side by side is increased, but a dimension in a second direction (predetermined direction) intersecting the first direction can be reduced. Accordingly, it is possible to provide an advantageous layout when restriction in the first direction is loose and restriction in the second direction is severe. Accordingly, a dimension of the unit in the predetermined direction can be reduced.

### BRIEF DESCRIPTION OF DRAWINGS

[FIG. 1] FIG. 1 is a configuration diagram of a vehicle including a unit according to an embodiment of the present invention.
[FIG. 2] FIG. 2 is a cross-sectional view of the unit.
[FIG. 3] FIG. 3 is a side view of the unit.
[FIG. 4] FIG. 4 is a skeleton diagram of the unit.
[FIG. 5] FIG. 5 is a skeleton diagram of a unit according to a comparative example.
[FIG. 6] FIG. 6 is a configuration diagram illustrating a first step of a vehicle manufacturing method.
[FIG. 7] FIG. 7 is a configuration diagram illustrating a second step of the vehicle manufacturing method.

### DESCRIPTION OF EMBODIMENTS

Hereinafter, a drive unit 100 as a unit according to an embodiment of the present invention and a vehicle 1 including the drive unit 100 will be described with reference to the drawings.

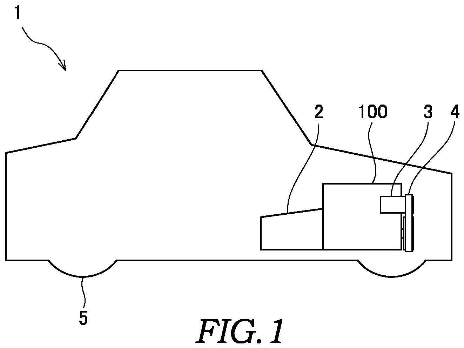

First, the vehicle 1 will be described with reference to FIG. 1. FIG. 1 is a configuration diagram of the vehicle 1 including the drive unit 100.

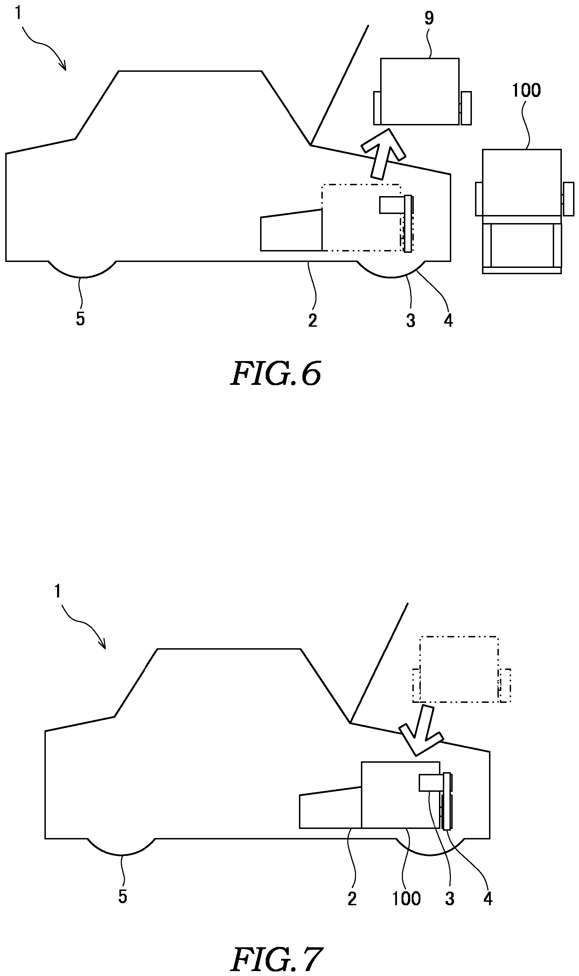

The vehicle 1 is a so-called conversion electric vehicle (EV) in which an internal combustion engine 9 is removed from the vehicle driven by the internal combustion engine 9 (see FIG. 6), the drive unit 100 is mounted instead, and the vehicle 1 is driven by the drive unit 100. The vehicle 1 includes the drive unit 100, a transmission 2 serving as a first power transmission mechanism, an auxiliary machine 3, a belt 4 serving as a second power transmission mechanism, and driving wheels 5.

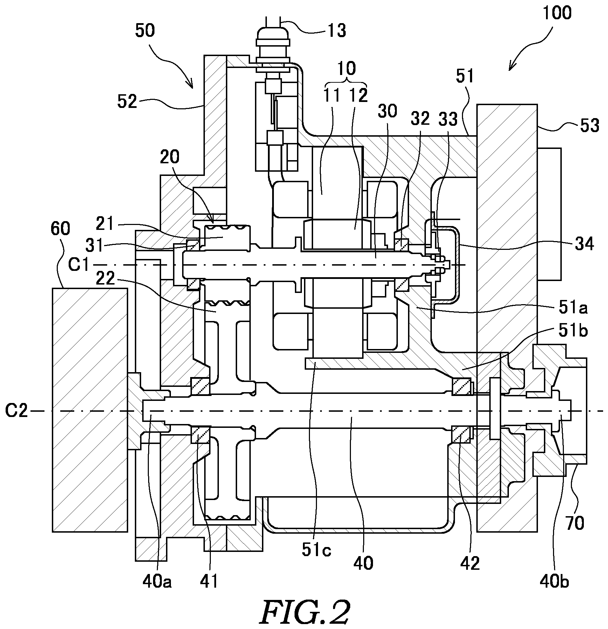

The drive unit 100 is an electric drive unit including a rotary electric machine 10 (see FIG. 2) described later. A specific configuration of the drive unit 100 will be described later in detail with reference to FIG. 2.

Note that the unit is used to drive the driving wheels 5 of the vehicle 1, but is not limited thereto, and may be used to drive an electrical product, for example. The unit is also called a motor unit (a unit including at least a motor), a power transmission device (a device including at least a power transmission mechanism (for example, a gear mechanism and/or a differential gear mechanism)), or the like. Note that a device (unit) including a motor and a power transmission mechanism belongs to concepts of both a motor unit and a power transmission device.

The transmission 2 changes a speed of a driving force from the drive unit 100 and transmits the driving force to the driving wheels 5. The transmission 2 may be an automatic transmission or a manual transmission.

The auxiliary machine 3 is driven by the drive unit 100. The auxiliary machine 3 is, for example, an alternator that is rotationally driven by the rotary electric machine 10 to generate electric power. The auxiliary machine 3 is connected downstream of a second output end 40b (see FIG. 2) of a second shaft 40 described later.

The belt 4 transmits the driving force of the drive unit 100 to the auxiliary machine 3.

The driving wheels 5 are connected downstream of a first output end 40a (see FIG. 2) of the second shaft 40 described later. Here, the driving wheels 5 are rear wheels of the vehicle 1, but may be front wheels of the vehicle 1.

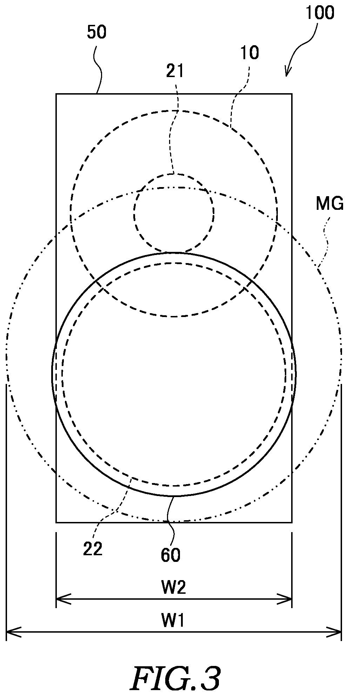

Next, a configuration of the drive unit 100 will be described with reference to FIGS. 2 and 3. FIG. 2 is a cross-sectional view of the drive unit 100, and FIG. 3 is a side view of the drive unit 100.

As shown in FIG. 2, the drive unit 100 includes the rotary electric machine 10, a speed reducer 20 serving as a speed reduction mechanism, a first shaft 30, the second shaft 40 serving as a shaft, a housing 50, a flywheel 60, and a pulley 70.

The rotary electric machine 10 functions as an electric motor and/or a generator. The rotary electric machine 10 is disposed on a first axis C1. The rotary electric machine 10 includes a stator 11 and a rotor 12. The stator 11 is non-rotatably supported by a motor support portion 51c of the housing 50, which will be described later. The rotor 12 is provided on an inner periphery of the stator 11 and rotates with respect to the stator 11. A small-diameter gear 21 is attached to the rotor 12 via the first shaft 30. The rotor 12 rotates together with the first shaft 30 and the small-diameter gear 21.

The speed reducer 20 includes the small-diameter gear 21 as a first gear and a large-diameter gear 22 as a second gear.

The small-diameter gear 21 is connected downstream of the rotary electric machine 10. The small-diameter gear 21 is disposed on the first axis C1. The expression "disposed on the first axis C1" means being disposed coaxially with other components disposed on the first axis C1.

The large-diameter gear 22 meshes with the small-diameter gear 21. The large-diameter gear 22 is disposed on a second axis C2 parallel to the first axis C1. The expression "disposed on the second axis C2" means being disposed coaxially with other components disposed on the second axis C2. The large-diameter gear 22 is formed to have a diameter larger than that of the small-diameter gear 21. Therefore, the small-diameter gear 21 and the large-diameter gear 22 constitute the speed reducer 20 that reduces a speed of an output of the rotary electric machine 10 and transmits the output to a downstream side.

Here, as shown in FIG. 3, if the same output as that of the drive unit 100 is generated only by the rotary electric machine MG, a dimension (W1) in a radial direction of the rotary electric machine MG is equal to an outer diameter of the unit and is the same dimension in any direction. Therefore, a dimension in a width direction of the unit may increase.

In contrast, in the drive unit 100, a dimension in the first direction (here, a height direction) in which the small-diameter gear 21 and the large-diameter gear 22 are arranged side by side is larger than that of the rotary electric machine MG, but a dimension (W2) in the second direction (here, the width direction) as a predetermined direction intersecting (here, orthogonal to) the first direction can be made smaller than that of the rotary electric machine MG (W2 < W1). Accordingly, it is possible to provide an advantageous layout when restriction in the first direction is loose and restriction in the second direction is severe. Accordingly, the dimension in the predetermined direction of the drive unit 100 can be reduced.

The larger a maximum output torque of the rotary electric machine 10, the larger a size thereof becomes, but by providing the speed reducer 20 downstream of the rotary electric machine 10, a torque of the rotary electric machine 10 is increased by the speed reducer 20. Accordingly, the maximum output torque of the rotary electric machine 10 can be set to be small, and therefore, an option for reducing the size of the rotary electric machine 10 can be provided.

As shown in FIG. 2, the large-diameter gear 22 is disposed to be sandwiched between the first output end 40a and the second output end 40b of the second shaft 40, and is located on the first output end 40a side.

Since a driver feels a change in behavior of the driving wheels 5 as a change in behavior of the vehicle 1 during driving, an influence of the behavior of the driving wheels 5 is important. A change in behavior transmitted to an input element (here, the transmission 2) of the first output end 40a is directly linked to the change in behavior of the driving wheels 5. On the other hand, a change in behavior transmitted to the auxiliary machine 3 is not directly linked to the change in behavior of the vehicle 1 felt by the driver during driving. Therefore, by providing the large-diameter gear 22 at a position closer to the first output end 40a than the second output end 40b, a distance between the large-diameter gear 22 and the first output end 40a can be reduced, and therefore an influence of torsion or deflection of the second shaft 40 can be suppressed and the change in behavior of the vehicle 1 can be reduced.

The first shaft 30 supports the small-diameter gear 21 and the rotor 12 of the rotary electric machine 10. The first shaft 30 is an output shaft of the rotary electric machine 10. The first shaft 30 is provided with a resolver 33 as a rotation speed detector for detecting a rotation speed. The first shaft 30 rotates about the first axis C1. The first shaft 30 is rotatably supported by the housing 50 via a bearing 31 and a bearing 32.

The second shaft 40 is connected downstream of the large-diameter gear 22. The second shaft 40 is disposed on the second axis C2. The second shaft 40 rotates about the second axis C2. The second shaft 40 is rotatably supported by the housing 50 via a bearing 41 and a bearing 42. The second shaft 40 is provided at the same position as a crankshaft (not shown) of the internal combustion engine 9 (see FIG. 6) removed from the vehicle 1.

The second shaft 40 includes the first output end 40a and the second output end 40b. The first output end 40a and the second output end 40b are arranged on the second axis C2. The first output end 40a and the second output end 40b are provided at the same positions as a first output end and a second output end of the crankshaft, respectively.

The housing 50 is a housing member that houses the rotary electric machine 10, the speed reducer 20, the first shaft 30, the second shaft 40, and an inverter (not shown). The housing 50 is implemented by one or more cases. Specifically, the housing 50 is implemented by a first case 51, a second case 52, and a third case 53.

The housing 50 forms a 3-in-1 (three-in-one) drive unit 100. The 3-in-1 means that a part of a motor case housing the rotary electric machine 10, a part of a speed reducer case housing the speed reducer 20, and a part of an inverter case housing the inverter are integrally formed.

The first case 51 is formed in a tubular shape with both ends open. The first case 51 includes a support wall 51a, a shaft support portion 51b, and the motor support portion 51c.

The support wall 51a is provided perpendicular to an axial direction of the first case 51. The axial direction means an axial direction of a rotation axis of components constituting the drive unit 100. The components are, for example, the rotary electric machine 10 and the speed reducer 20. The support wall 51a rotatably supports the first shaft 30 via the bearing 32. The resolver 33 and a cover 34 that houses the resolver 33 are attached to the support wall 51a.

The second case 52 is provided side by side with the first case 51 in the axial direction. The second case 52 closes one opening of the first case 51. The second case 52 rotatably supports the first shaft 30 via the bearing 31 and rotatably supports the second shaft 40 via the bearing 41.

The third case 53 is provided side by side with the first case 51 and the second case 52 in the axial direction. The third case 53 closes the other opening of the first case 51.

The flywheel 60 is disposed on the second axis C2. The flywheel 60 transmits the output torque of the drive unit 100 to the transmission 2. The flywheel 60 is provided at the same position as a flywheel (not shown) of the internal combustion engine 9 (see FIG. 6) removed from the vehicle 1.

The pulley 70 is disposed on the second axis C2. The belt 4 is wound around the pulley 70. The pulley 70 transmits the driving force of the drive unit 100 to the auxiliary machine 3 via the belt 4. The pulley 70 is provided at the same position as a pulley (not shown) of the internal combustion engine 9 (see FIG. 6) removed from the vehicle 1.

Note that when the internal combustion engine 9 is removed, the pulley 70 is left in the vehicle 1 without being removed together with the internal combustion engine 9, and when the pulley 70 is used in attaching the drive unit 100, the pulley 70 constitutes the second power transmission mechanism.

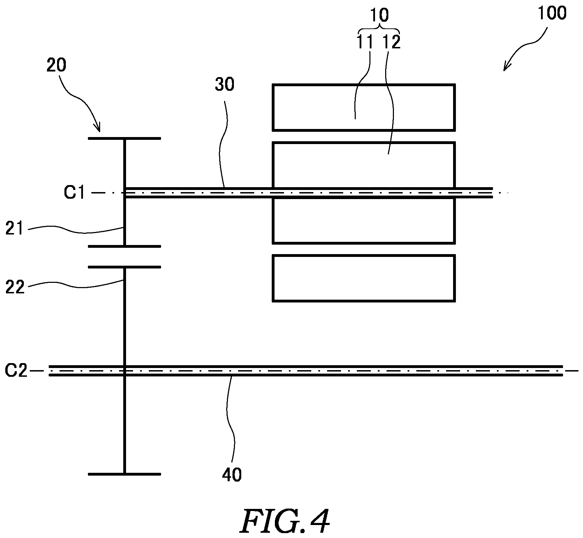

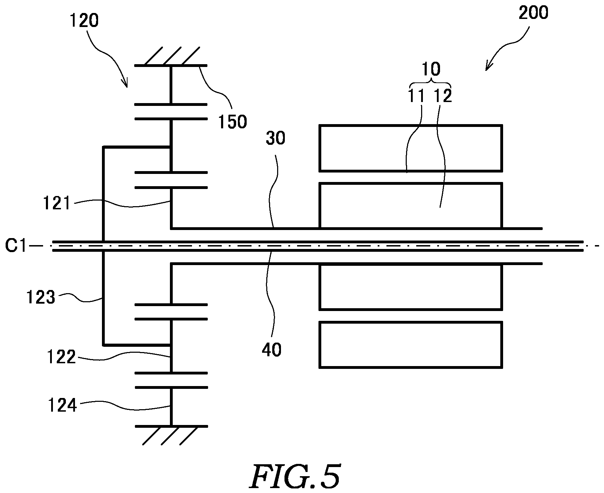

Next, advantages of the drive unit 100 in comparison with a comparative example will be described with reference to FIGS. 4 and 5. FIG. 4 is a skeleton diagram of the unit. FIG. 5 is a skeleton diagram of a drive unit 200 as a unit according to the comparative example.

As shown in FIG. 5, the drive unit 200 according to the comparative example includes the rotary electric machine 10, a speed reducer 120 serving as a speed reduction mechanism, the first shaft 30, and the second shaft 40.

The speed reducer 120 is a planetary gear mechanism including a sun gear 121, a planetary gear 122, a carrier 123, and a ring gear 124. In the speed reducer 120, the ring gear 124 is non-rotatably supported by a housing 150. The speed reducer 120 reduces the output torque of the rotary electric machine 10 input from the sun gear 121 via the first shaft 30, and outputs the reduced torque to a downstream side from the carrier 123 via the second shaft 40. Accordingly, the drive unit 200 can output the driving force from both ends of the second shaft 40.

However, in the drive unit 200, the second shaft 40 passes through an inner periphery of the first shaft 30. Therefore, it is necessary to form the first shaft 30 in a tubular shape having a through hole of a size through which the second shaft 40 can be inserted, and the outer diameter of the rotary electric machine 10 may increase in all directions in the radial direction.

In contrast, as illustrated in FIG. 4, in the drive unit 100, the dimension in the first direction (here, the height direction) in which the small-diameter gear 21 and the large-diameter gear 22 are arranged side by side is larger than that of the drive unit 200, but the dimension in the second direction (here, the width direction) as a predetermined direction intersecting (here, orthogonal to) the first direction can be made smaller than that of the drive unit 200. Accordingly, it is possible to provide an advantageous layout when restriction in the first direction is loose and restriction in the second direction is severe. Accordingly, the dimension in the predetermined direction of the drive unit 100 can be reduced.

Hereinafter, a method for manufacturing the vehicle 1 will be described with reference to FIGS. 6 and 7. FIG. 6 is a configuration diagram illustrating a first step of the method for manufacturing the vehicle 1. FIG. 7 is a configuration diagram illustrating a second step of the method for manufacturing the vehicle 1.

The method for manufacturing the vehicle 1 is for manufacturing the vehicle 1 that includes the transmission 2, the belt 4, the driving wheels 5 connected downstream of the transmission 2, and the auxiliary machine 3 connected downstream of the belt 4, in which an input portion (flywheel 60) of the transmission 2 and an input portion (pulley 70) of the belt 4 are coaxially arranged. The method for manufacturing the vehicle 1 includes the first step and the second step.

First, as shown in FIG. 6, in the first step, the drive unit 100 is prepared. As described above, the drive unit 100 includes the rotary electric machine 10, the small-diameter gear 21 connected downstream of the rotary electric machine 10, the large-diameter gear 22 that meshes with the small-diameter gear 21, and the second shaft 40 connected downstream of the large-diameter gear 22. The second shaft 40 includes the first output end 40a and the second output end 40b. The rotary electric machine 10 and the small-diameter gear 21 are arranged on the first axis C1. The large-diameter gear 22, the second shaft 40, the first output end 40a and the second output end 40b are arranged on the second axis C2. The large-diameter gear 22 is disposed and sandwiched between the first output end 40a and the second output end 40b.

In this way, by preparing the drive unit 100, two power transmission mechanisms (the transmission 2 and the belt 4) can be implemented in a coaxial state.

The method for manufacturing the vehicle 1 includes a step of removing the internal combustion engine 9 connected to the input portion of the transmission 2 and the input portion of the belt 4 at least before the second step.

That is, the drive unit 100 may be prepared after the internal combustion engine 9 is removed, or the drive unit 100 may be prepared in advance before the internal combustion engine 9 is removed.

Subsequently, as shown in FIG. 7, in the second step, the drive unit 100 is mounted on the vehicle 1. In this case, the first output end 40a is connected to the input portion of the transmission 2, and the second output end 40b is connected to the input portion of the belt 4.

In the internal combustion engine 9, the input portion of the transmission 2 and the input portion of the belt 4 are often provided coaxially, and application of the drive unit 100 having such a configuration to a conversion EV in which the vehicle 1 with the internal combustion engine 9 is modified into an electric vehicle is an advantageous modification method. Note that the modification is not only an action of reproduction, and the modification method is also a method for producing an object (manufacturing method).

Since the internal combustion engine 9 exists in a vertically long space as viewed in the axial direction, when the conversion EV is manufactured, restriction in the vertical direction is loose and restriction in the horizontal direction is severe. Therefore, in such a case, it is very preferable to apply the drive unit 100 having the configuration.

The configurations and effects of the present embodiment described above will be collectively described.
(1) The drive unit 100 includes the rotary electric machine 10, the small-diameter gear 21 connected downstream of the rotary electric machine 10, the large-diameter gear 22 meshing with the small-diameter gear 21, and the second shaft 40 connected downstream of the large-diameter gear 22. The second shaft 40 includes the first output end 40a and the second output end 40b. The rotary electric machine 10 and the small-diameter gear 21 are arranged on the first axis C1. The large-diameter gear 22, the second shaft 40, the first output end 40a and the second output end 40b are arranged on the second axis C2. The large-diameter gear 22 is disposed to be sandwiched between the first output end 40a and the second output end 40b.
   According to this configuration, the dimension in the first direction in which the small-diameter gear 21 and the large-diameter gear 22 are arranged side by side is increased, but the dimension in the second direction (predetermined direction) intersecting the first direction can be reduced. Accordingly, it is possible to provide an advantageous layout when restriction in the first direction is loose and restriction in the second direction is severe. Accordingly, the dimension in the predetermined direction of the drive unit 100 can be reduced.
(2) The small-diameter gear 21 and the large-diameter gear 22 constitute the speed reducer 20.
   According to this configuration, the larger the maximum output torque of the rotary electric machine 10, the larger the size thereof becomes, but by providing the speed reducer 20 downstream of the rotary electric machine 10, the torque of the rotary electric machine 10 is increased by the speed reducer 20. Accordingly, the maximum output torque of the rotary electric machine 10 can be set to be small, and therefore, an option for reducing the size of the rotary electric machine 10 can be provided.
(3) The vehicle 1 includes the driving wheels 5 connected downstream of the first output end 40a and the auxiliary machine 3 connected downstream of the second output end 40b, and the large-diameter gear 22 is located on the first output end 40a side.
   Since the driver feels the change in behavior of the driving wheels 5 as the change in behavior of the vehicle 1 during driving, the influence of the behavior of the driving wheels 5 is important. The change in behavior transmitted to the input element (here, the transmission 2) of the first output end 40a is directly linked to the change in behavior of the driving wheels 5. On the other hand, the change in behavior transmitted to the auxiliary machine 3 is not directly linked to the change in behavior of the vehicle 1 felt by the driver during driving. Therefore, by providing the large-diameter gear 22 at a position closer to the first output end 40a than the second output end 40b, the distance between the large-diameter gear 22 and the first output end 40a can be reduced, and therefore the influence of torsion or deflection of the second shaft 40 can be suppressed and the change in behavior of the vehicle 1 can be reduced.
(4) The method for manufacturing the vehicle 1 including the transmission 2, the belt 4, the driving wheels 5 connected downstream of the transmission 2, and the auxiliary machine 3 connected downstream of the belt 4, in which the input portion (flywheel 60) of the transmission 2 and the input portion (pulley 70) of the belt 4 are coaxially arranged includes: the first step of preparing the drive unit 100 including the rotary electric machine 10, the small-diameter gear 21 connected downstream of the rotary electric machine 10, the large-diameter gear 22 meshing with the small-diameter gear 21, and the second shaft 40 connected downstream of the large-diameter gear 22, in which the second shaft 40 includes the first output end 40a and the second output end 40b, the rotary electric machine 10 and the small-diameter gear 21 are arranged on the first axis C1, the large-diameter gear 22, the second shaft 40, the first output end 40a and the second output end 40b are arranged on the second axis C2, and the large-diameter gear 22 is disposed to be sandwiched between the first output end 40a and the second output end 40b, and the second step of mounting the drive unit 100 such that the first output end 40a is connected to the input portion of the transmission 2 and the second output end 40b is connected to the input portion of the belt 4.
   According to this configuration, the dimension in the first direction in which the small-diameter gear 21 and the large-diameter gear 22 are arranged side by side is increased, but the dimension in the second direction (predetermined direction) intersecting the first direction can be reduced. Accordingly, it is possible to provide an advantageous layout when restriction in the first direction is loose and restriction in the second direction is severe. Accordingly, the dimension in the predetermined direction of the drive unit 100 can be reduced.
   By preparing the drive unit 100 having such a configuration, the two power transmission mechanisms (the transmission 2 and the belt 4) can be implemented in a coaxial state.
(5) The method for manufacturing the vehicle 1 includes the step of removing the internal combustion engine 9 connected to the input portion of the transmission 2 and the input portion of the belt 4 at least before the second step.

According to this configuration, in the internal combustion engine 9, the input portion of the transmission 2 and the input portion of the belt 4 are often provided coaxially, and application of the drive unit 100 having such a configuration to a conversion EV in which the vehicle 1 with the internal combustion engine 9 is modified into an electric vehicle is an advantageous modification method. Note that the modification is not only an action of reproduction, and the modification method is also a method for producing an object (manufacturing method).

Since the internal combustion engine 9 exists in a vertically long space as viewed in the axial direction, when the conversion EV is manufactured, restriction in the vertical direction is loose and restriction in the horizontal direction is severe. Therefore, in such a case, it is very preferable to apply the drive unit 100 having the configuration.

Note that the drive unit 100 may be prepared after the internal combustion engine 9 is removed, or the drive unit 100 may be prepared in advance before the internal combustion engine 9 is removed.

Although the embodiment of the present invention has been described above, the above embodiment is merely an application example of the present invention and is not intended to limit the technical scope of the present invention to the specific configuration of the above embodiment.

For example, when it is desired to increase the output of the drive unit 100, a length in the axial direction of the rotary electric machine 10 may be increased, a length in the axial direction of the first case 51 in the housing 50 may be increased, and a length of the second shaft 40 may be increased. Under this case, similarly, the dimension in the first direction in which the small-diameter gear 21 and the large-diameter gear 22 are arranged side by side is increased, but the dimension in the second direction (predetermined direction) intersecting the first direction can be reduced.

### DESCRIPTION OF REFERENCE SIGNS

- 100: drive unit (unit)

- 1: vehicle
- 2: transmission (first power transmission mechanism)
- 3: auxiliary machine
- 4: belt (second power transmission mechanism)
- 5: driving wheel
- 9: internal combustion engine
- 10: rotary electric machine
- 20: speed reducer (speed reduction mechanism)
- 21: small-diameter gear
- 22: large-diameter gear
- 40: second shaft (shaft)
- 40a: first output end
- 40b: second output end
- C1: first axis
- C2: second axis

## Claims

1. A unit, comprising:
a rotary electric machine;
a first gear connected downstream of the rotary electric machine;
a second gear configured to mesh with the first gear; and
a shaft connected downstream of the second gear, wherein
the shaft includes a first output end and a second output end,
the rotary electric machine and the first gear are arranged on a first axis,
the second gear, the shaft, the first output end, and the second output end are arranged on a second axis, and
the second gear is disposed to be sandwiched between the first output end and the second output end.

2. The unit according to claim 1, wherein
the first gear and the second gear constitute a speed reduction mechanism.

3. A vehicle equipped with the unit according to claim 1 or 2, comprising:
a driving wheel connected downstream of the first output end; and
an auxiliary machine connected downstream of the second output end, wherein
the second gear is located on a first output end side.

4. A vehicle manufacturing method for manufacturing a vehicle which includes a first power transmission mechanism, a second power transmission mechanism, a driving wheel connected downstream of the first power transmission mechanism, and an auxiliary machine connected downstream of the second power transmission mechanism, and in which an input portion of the first power transmission mechanism and an input portion of the second power transmission mechanism are coaxially arranged, the vehicle manufacturing method comprising:
a first step of preparing a unit which includes a rotary electric machine, a first gear connected downstream of the rotary electric machine, a second gear configured to mesh with the first gear, and a shaft connected downstream of the second gear, and in which the shaft includes a first output end and a second output end, the rotary electric machine and the first gear are arranged on a first axis, the second gear, the shaft, the first output end, and the second output end are arranged on a second axis, and the second gear is disposed to be sandwiched between the first output end and the second output end; and
a second step of mounting the unit such that the first output end is connected to the input portion of the first power transmission mechanism and the second output end is connected to the input portion of the second power transmission mechanism.

5. The vehicle manufacturing method according to claim 4, further comprising:
a step of removing an internal combustion engine connected to the input portion of the first power transmission mechanism and the input portion of the second power transmission mechanism at least before the second step.
